# EUROPEAN PATENT SPECIFICATION

(11) **EP 2 819 046 B1**
(45) Date of publication and mention of the grant of the patent: **03.06.2020**
(21) Application number: 12868976.7
(22) Date of filing: 27.12.2012
(51) Int. Cl.: G06F 21/00, G06F 21/60, G06F 21/10, G06F 21/64

(54) **APPARATUS AND METHOD FOR VERIFYING ELECTRONIC BOOK INTEGRITY**
VORRICHTUNG UND VERFAHREN ZUR VERIFIZIERUNG DER INTEGRITÄT EINES ELEKTRONISCHEN BUCHES
APPAREIL ET PROCÉDÉ DE VÉRIFICATION DE L'INTÉGRITÉ DES LIVRES ÉLECTRONIQUES

(30) Priority: 21.02.2012 KR 20120017454
(43) Date of publication of application: 31.12.2014
(73) Proprietor: Fasoo. Com Co., Ltd, Seoul 121-270 (KR)
(72) Inventor: KIM, Eun-Bum, Gyeonggi-do 456-724 (KR); PARK, Chel, Seoul 152-773 (KR); KIM, Sun-Young, Seoul 151-764 (KR)
(74) Representative: Grünecker Patent- und Rechtsanwälte PartG mbB
(86) International application number: PCT/KR2012/011580
(87) International publication number: WO 2013/125783

(56) References cited:
- EP-A2- 0 845 733
- KR-A- 20030 040 427
- KR-A- 20050 088 413
- US-A1- 2004 054 906
- US-A1- 2007 049 250
- US-A1- 2009 327 737

## Description

### [Technical Field]

The present invention relates to an apparatus and method for generating an electronic book (e-book) and an apparatus and method for verifying the integrity of an e-book, and more particularly, to an apparatus and method for generating an e-book including information for verifying the integrity of the e-book, and verifying the integrity of an e-book from information included in the e-book to determine whether or not the e-book has been falsified.

### [Background Art]

With the recent rapid spread of high-speed communication networks, a variety of services are provided via the networks and used by many users. For example, users of services, such as information retrieval, games, e-commerce, Internet banking, and email, are constantly increasing in number. In addition, with the rapid spread of portable electronic equipment, such as smart phones and tablet personal computers (PCs), new services are being developed and provided. Markets relating to e-books corresponding to one of the services are gradually growing according to such a trend. However, due to their characteristics, e-books are vulnerable to falsification and cannot protect copyrights appropriately.

Patent Literature 1, KR 10-2003-0027181 (The Electronics and Telecommunications Research Institute (ETRI) April 7, 2003) discloses a technology for providing the confidentiality of electronic documents exchanged in e-commerce through an extensible markup language (XML) encryption and decryption procedure of various electronic documents including XML electronic documents as a method of encrypting and decrypting an electronic document.

Patent Literature 2, KR 10-1085283 (Adrea LLC November 14, 2011) discloses a technology for providing a user with text or an image of an appropriate size, for providing a display of content, such as a layout, to reflect a copyright holder's will, and for a user to easily construct a data structure, as an information processing system and method and a recording medium.

EP 0 845 733 A2 discloses a method for establishing and verifying the authenticity of data within one or more data files. A method for verifying the authenticity of data involve providing one data file which includes an identifier and a signature file which includes the identifier for the data file as well as a signature. The digital signature is then verified within a computer system, and the identifier and the data file is compared with the identifier and the signature file.

It is therefore the object of the present invention to provide an improved apparatus for verifying integrity of an electronic book, and a method for verifying integrity of an electronic book.

This object is solved by the subject matter of the independent claims.

Preferred embodiments are defined by the dependent claims.

The present invention is directed to providing an apparatus and method for verifying the integrity of an e-book from information included in the e-book to determine whether or not the e-book has been falsified.

### [Technical Solution]

One aspect of the present invention provides an apparatus for verifying the integrity of an electronic book (e-book), the apparatus including: an e-book receiving unit configured to receive e-book data including e-book e-signature data including e-signature-object information including a fourth digest value generated by applying a second hash function to e-book basis data including title information of the e-book, a first digest value generated by applying a first hash function to the e-signature-object information, an e-signature value generated by applying an encryption function employing a private key as an encryption key to the first digest value, and a value of a public key corresponding to the private key, and the e-book basis data; and an e-book integrity verification unit configured to verify integrity of the e-book data received through the e-book receiving unit by comparing a fifth digest value generated by applying the encryption function employing the public key as a decryption key to the e-signature value and a sixth digest value generated by applying the first hash function to the e-signature-object information with the first digest value.

Another aspect related to the present invention provides an apparatus for generating an e-book, the apparatus including: a digest unit configured to generate a fourth digest value by applying a second hash function to e-book basis data including title information of the e-book, and generate a first digest value by applying a first hash function to e-signature-object information including the fourth digest value; an e-signature unit configured to generate an e-signature value by applying an encryption function employing a private key as an encryption key to the first digest value; and an e-book generation unit configured to generate e-book data including e-book signature data including the e-signature-object information, the first digest value, the e-signature value, and a public key value corresponding to the private key, and the e-book basis data.

Another aspect of the present invention provides a method of verifying the integrity of an e-book, the method including: receiving e-book data including e-book e-signature data including e-signature-object information including a fourth digest value generated by applying a second hash function to e-book basis data including title information of the e-book, a first digest value generated by applying a first hash function to the e-signature-object information, an e-signature value generated by applying an encryption function employing a private key as an encryption key to the first digest value, and a value of a public key corresponding to the private key, and the e-book basis data; and verifying the integrity of the received e-book data by comparing at least one of a fifth digest value generated by applying the encryption function employing the public key as a decryption key to the e-signature value and a sixth digest value generated by applying the first hash function to the e-signature-object information with the first digest value.

Another aspect related to the present invention provides a method of generating an e-book, the method including: generating a fourth digest value by applying a second hash function to e-book basis data including title information of the e-book; generating a first digest value by applying a first hash function to e-signature-object information including the fourth digest value; generating an e-signature value by applying an encryption function employing a private key as an encryption key to the first digest value; and generating e-book data including e-book signature data including the e-signature-object information, the first digest value, the e-signature value, and a public key value corresponding to the private key, and the e-book basis data.

### [Advantageous Effects]

According to an apparatus and method for generating an electronic book (e-book) and an inventive apparatus and method for verifying the integrity of an e-book, an e-book is generated to conform to the electronic publication (EPUB) standard and include information for protecting the copyright on the e-book, so that the e-book market can be activated.

In addition, an e-signature is not put to the entire data of an e-book but is put to a part of the data, and thus it is possible to efficiently append the e-signature while reducing the time and overhead required for the e-signature.

### [Description of Drawings]

FIG. 1 is a block diagram of an apparatus for generating an electronic book (e-book) according to an exemplary embodiment of the present invention.
FIGS. 2 to 9 are diagrams illustrating e-book data according to an exemplary embodiment of the present invention.
FIG. 10 is a flowchart illustrating a method of generating an e-book according to an exemplary embodiment of the present invention.
FIG. 11 is a block diagram of an apparatus for verifying the integrity of an e-book according to an exemplary embodiment of the present invention.
FIG. 12 is a detailed block diagram of an apparatus for verifying the integrity of an e-book according to an exemplary embodiment of the present invention.
FIG. 13 is a flowchart illustrating a method of verifying the integrity of an e-book according to an exemplary embodiment of the present invention.

### [Mode for Invention]

Hereinafter, exemplary embodiments of an inventive apparatus and method for generating an electronic book (e-book) and an inventive apparatus and method for verifying the integrity of an e-book will be described in detail with reference to the accompanying drawings.

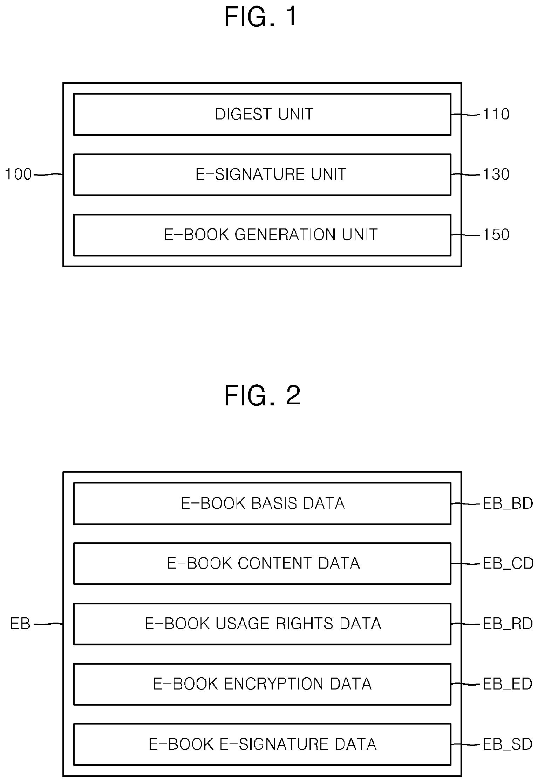

FIG. 1 is a block diagram of an apparatus for generating an e-book according to an exemplary embodiment of the present invention.

Referring to FIG. 1, an e-book generation apparatus 100 generates an e-book including information for verifying the integrity and the usage rights to the e-book. Here, the e-book generation apparatus 100 generates an e-book conforming to the electronic publication (EPUB) standard set up by the International Digital Publishing Forum (IDPF).

FIGS. 2 to 9 are diagrams illustrating e-book data according to an exemplary embodiment of the present invention.

Referring to FIG. 2, e-book data EB according to the present invention includes e-book basis data EB_BD, e-book content data EB_CD, e-book usage rights data EB_RD, e-book encryption data EB_ED, and e-book e-signature data EB_SD.

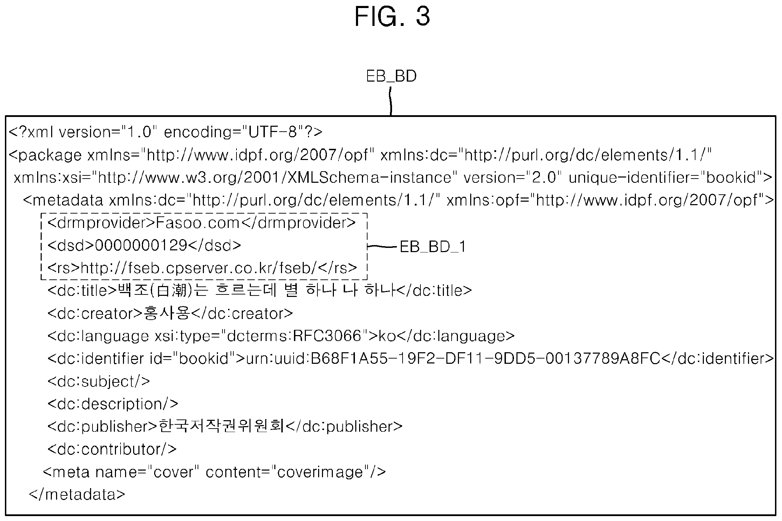

Here, the e-book basis data EB_BD includes basic data about an e-book, such as a title, an author, and a publisher. The e-book basis data EB_BD may further include access information of a copyright management apparatus used to check the usage rights to the e-book. Referring to FIG. 3, the e-book basis data EB_BD may include copyright management apparatus access information EB_BD_1 including at least one of a domain code used to manage a digital rights management (DRM) solution supplier and a content provider and information on the uniform resource locator (URL) of the copyright management apparatus.

The e-book content data EB_CD includes actual content information of the e-book, such as text and pictures.

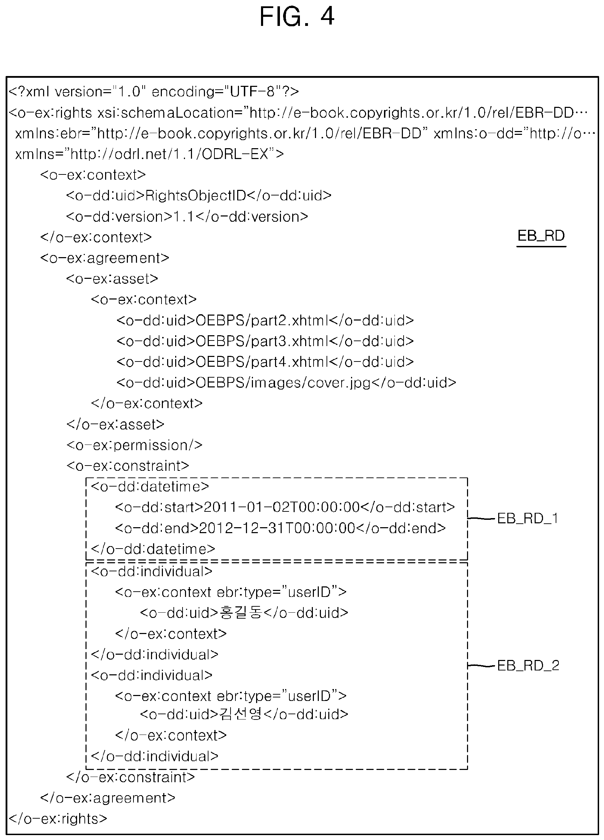

The e-book usage rights data EB_RD includes information on the usage rights to the e-book, such as usage period information EB_RD_1 and legal user information EB_RD_2. Referring to FIG. 4, the e-book usage rights data EB RD includes usage period information EB_RD_1 of the e-book, legal user information EB_RD_2, and so on.

The e-book encryption data EB_ED is used to decrypt a part of the e-book data EB when the part is encrypted, and includes information on encryption of the e-book.

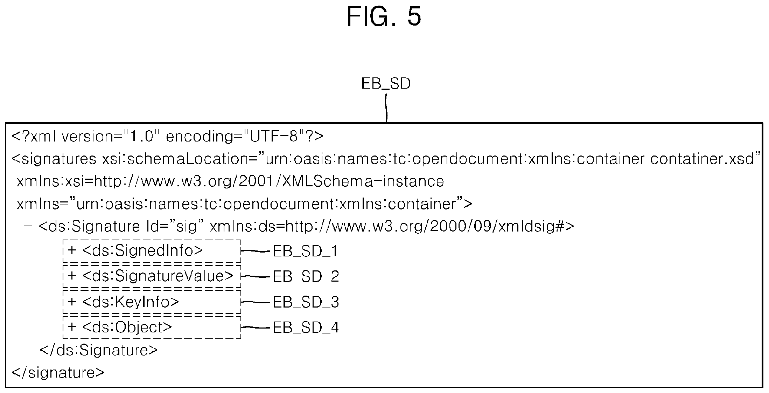

The e-book e-signature data EB_SD is used to verify the integrity of the e-book, and includes e-signature information, an e-signature value, decryption key information, e-signature-object information, and so on. Referring to FIG. 5, the e-book e-signature data EB_SD includes e-signature information EB_SD_1, an e-signature value EB_SD_2, decryption key information EB_SD_3, e-signature-object information EB_SD_4, and so on.

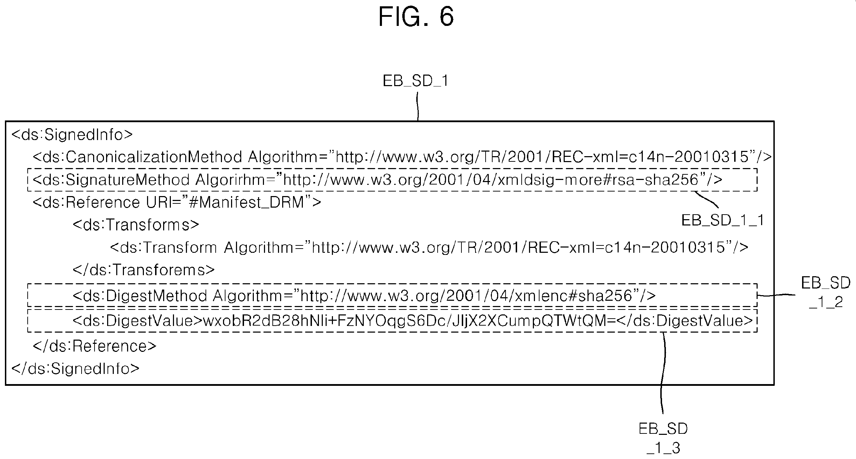

Referring to FIG. 6, the e-signature information EB_SD_1 includes a first digest value EB_SD_1_3 obtained from the e-signature-object information EB_SD_4 using a first hash function, information EB_SD_1_2 for identifying the first hash function used to obtain the first digest value EB_SD_1_3, information EB_SD_1_1 for identifying an encryption function used to obtain the e-signature value EB_SD_2, and so on.

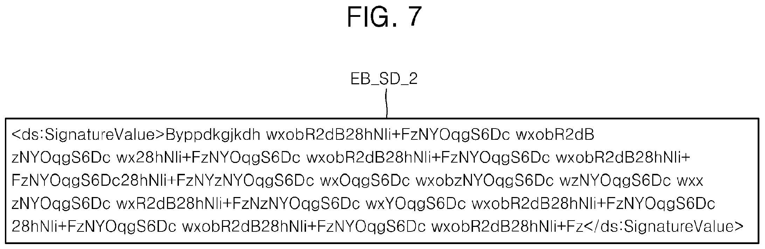

Referring to FIG. 7, the e-signature value EB_SD_2 is obtained from the first digest value EB_SD_1_3 included in the e-signature information EB_SD_1 using the encryption function and a private key provided by a reliable certification institute.

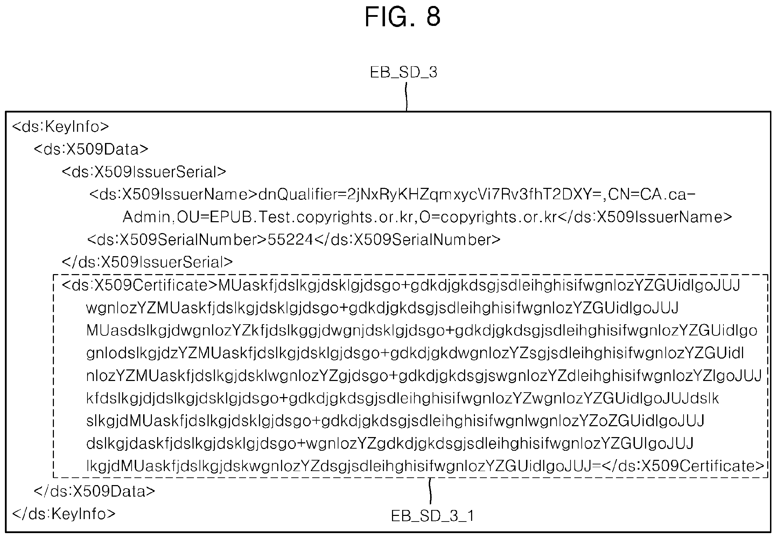

Referring to FIG. 8, the decryption key information EB_SD_3 includes a public key value EB_SD_3_1 corresponding to the private key used to obtain the e-signature value EB_SD_2, and so on.

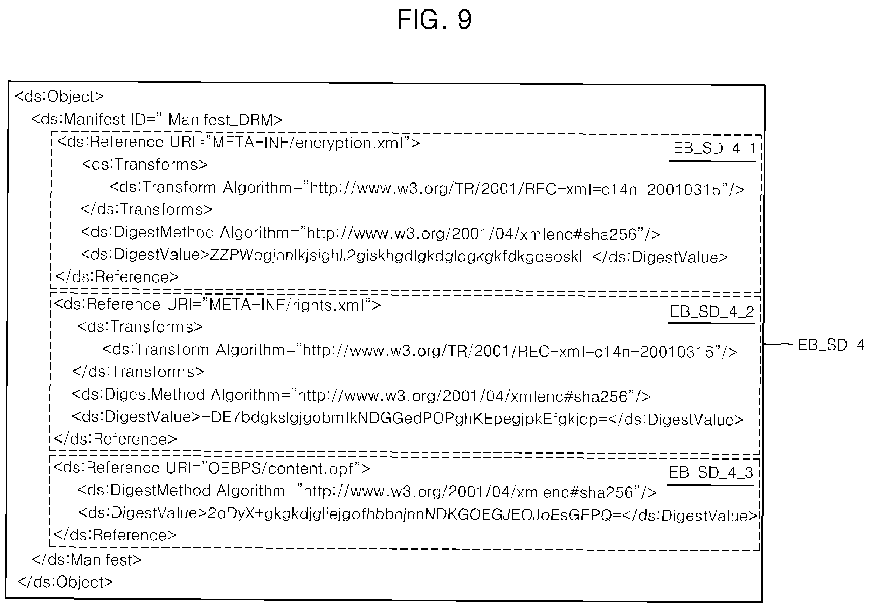

Referring to FIG. 9, the e-signature-object information EB_SD_4 represents an object of an e-signature used to determine whether or not the e-book data EB has been falsified, and includes first to third e-signature-object information EB_SD_4_1, EB_SD_4_2, and EB_SD_4_3.

The first e-signature-object information EB_SD_4_1 includes a second digest value obtained from the e-book encryption data EB_ED using a second hash function, information for identifying the second hash function used to obtain the second digest value, and so on. The second e-signature-object information EB_SD_4_2 includes a third digest value obtained from the e-book usage rights data EB_RD using the second hash function, information for identifying the second hash function used to obtain the third digest value, and so on. The third e-signature-object information EB_SD_4_3 includes a fourth digest value obtained from the e-book basis data EB_BD using the second hash function, information for identifying the second hash function used to obtain the fourth digest value, and so on.

In this way, by not putting an e-signature to the entire e-book but by putting an e-signature to a part of the e-book, it is possible to reduce overhead involved in e-signature. For example, the content (body) of an e-book is fundamental information that should not be falsified. However, the content (body) of an e-book is generally encrypted, and much overhead is involved in putting an e-signature to the entire e-book. Therefore, an e-signature is put to only the minimum information required to determine whether or not the e-book has been falsified.

In the present invention, the e-book encryption data EB_ED is set as one e-signature object because, when the e-book content data EB_CD is encrypted, information on the corresponding decryption key or encryption algorithm is included in the e-book encryption data EB_ED, and it is possible to verify the integrity of the encrypted e-book content data EB_CD by determining that the e-book encryption data EB_ED has not been falsified. Also, the e-book usage rights data EB_RD is set as one e-signature object because information on the usage rights of the e-book is included in the e-book usage rights data EB_RD, and it is possible to verify the integrity of the usage rights of the e-book by determining that the e-book usage rights data EB_RD has not been falsified. Further, the e-book basis data EB_BD is set as one e-signature object because the e-book basis data EB_BD includes basic information and copyright management apparatus access information of the e-book, and it is possible to verify the integrity of a subject that has encrypted the e-book content data EB_CD by determining that the e-book basis data EB_BD has not been falsified.

Referring back to FIG. 1, the e-book generation apparatus 100 includes a digest unit 110, an e-signature unit 130, and an e-book generation unit 150.

The digest unit 110 obtains a digest value from each of the e-book encryption data EB_ED, the e-book usage rights data EB_RD, and the e-book basis data EB_BD using the second hash function. In other words, the digest unit 110 applies the second hash function to each of the e-book encryption data EB_ED, the e-book usage rights data EB_RD, and the e-book basis data EB_BD, thereby generating the second to fourth digest values.

Also, the digest unit 110 obtains the first digest value EB_SD_1_3 from the e-signature-object information EB_SD_4 using the first hash function. In other words, the digest unit 110 applies the first hash function to the e-signature-object information EB_SD_4, thereby generating the first digest value EB_SD_1_3.

The e-signature unit 130 obtains the e-signature value EB_SD_2 from the first digest value EB_SD_1_3 that is obtained from the e-signature-object information EB_SD_4 using the encryption function and the private key provided by the reliable certification institute. In other words, the e-signature unit 130 applies the encryption function employing the private key as an encryption key to the first digest value EB_SD_1_3, thereby generating the e-signature value EB_SD_2.

The e-book generation unit 150 generates the e-book data EB based on the plurality of digest values obtained by the digest unit 110 and the e-signature value EB_SD_2 obtained by the e-signature unit 130.

In other words, the e-book generation unit 150 generates the e-signature-object information EB_SD_4 including the first to fourth digest values generated from the e-book encryption data EB_ED, the e-book usage rights data EB_RD, and the e-book basis data EB_BD, the information for identifying the second hash function used to generate the second to fourth digest values, and so on.

Also, the e-book generation unit 150 generates the e-signature information EB_SD_1 including the first digest value EB_SD_1_3 generated from the e-signature-object information EB_SD_4, the information EB_SD_1_2 for identifying the first hash function used to generate the first digest value EB_SD_1_3, the information EB_SD_1_1 for identifying the encryption function used to generate the e-signature value EB_SD_2.

Also, the e-book generation unit 150 generates the decryption key information EB_SD_3 including the public key value EB_SD_3_1 corresponding to the private key used to generate the e-signature value EB_SD_2, and so on.

Also, the e-book generation unit 150 generates the e-book e-signature data EB_SD including the e-signature information EB_SD_1, the e-signature value EB_SD_2, the decryption key information EB_SD_3, the e-signature-object information EB_SD_4, and so on.

Also, the e-book generation unit 150 generates the e-book basis data EB_BD including the copyright management apparatus access information EB_BD_1 and the e-book usage rights data EB_RD including the usage period information EB_RD_1 and the legal user information EB_RD_2 of the e-book.

Finally, the e-book generation unit 150 generates the e-book data EB including the e-book basis data EB_BD, the e-book content data EB_CD, the e-book usage rights data EB_RD, the e-book encryption data EB_ED, and the e-book e-signature data EB_SD.

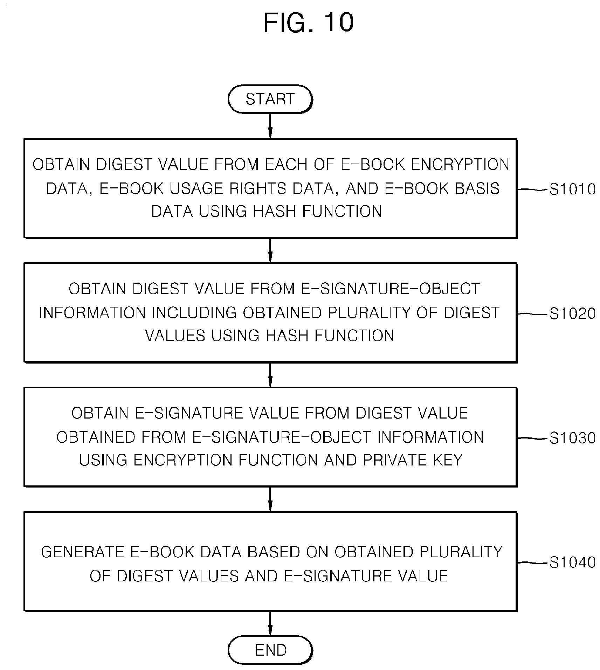

FIG. 10 is a flowchart illustrating a method of generating an e-book according to an exemplary embodiment of the present invention.

The e-book generation apparatus 100 obtains second to fourth digest values from e-book encryption data EB_ED, e-book usage rights data EB RD and e-book basis data EB_BD using a second hash function (S1010). In other words, the e-book generation apparatus 100 applies the hash function to each of the e-book encryption data EB_ED, the e-book usage rights data EB_RD, and the e-book basis data EB_BD, thereby generating the second to fourth digest values.

Then, the e-book generation apparatus 100 obtains a first digest value EB_SD_1_3 from e-signature-object information EB_SD_4 including the second to fourth digest values using a first hash function (S1020). In other words, the e-book generation apparatus 100 applies the first hash function to the e-signature-object information EB_SD_4, thereby generating the first digest value EB_SD_1_3.

Subsequently, the e-book generation apparatus 100 obtains an e-signature value EB_SD_2 from the first digest value EB_SD_1_3 obtained from the e-signature-object information EB_SD_4 using an encryption function and a private key (S1030). In other words, the e-book generation apparatus 100 applies the encryption function employing the private key as an encryption key to the e-signature-object information EB_SD_4, thereby generating the e-signature value EB_SD_2. Then, the e-book generation apparatus 100 generates e-book data EB based on the obtained plurality of digest values and the e-signature value EB_SD_2 (S1040).

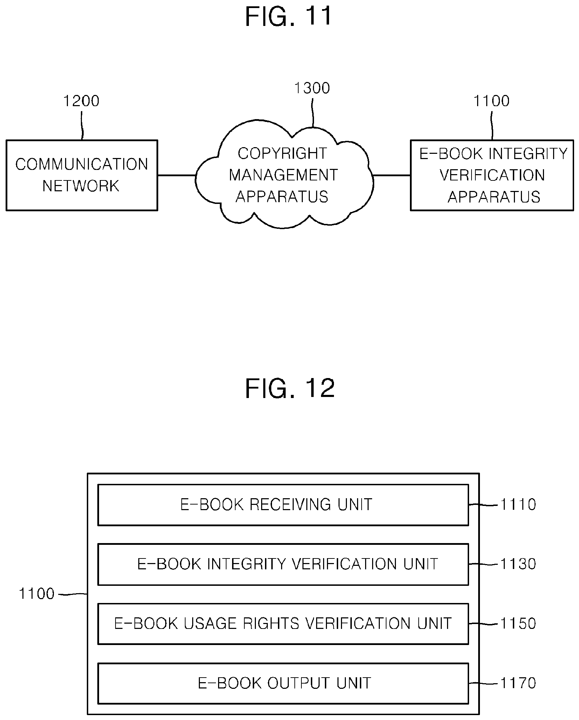

FIG. 11 is a block diagram of an apparatus for verifying the integrity of an e-book according to an exemplary embodiment of the present invention.

Referring to FIG. 11, an e-book integrity verification apparatus 1100 is connected to a copyright management apparatus 1200 via a communication network 1300. The e-book integrity verification apparatus 1100 receives e-book data EB from a user terminal (not shown) that is connected via the communication network 1300 or directly connected wired or wirelessly.

To determine whether or not an e-book has been falsified, the e-book integrity verification apparatus 1100 verifies the integrity of the e-book from information included in the e-book. Also, to check the usage rights to the e-book, the e-book integrity verification apparatus 1100 may access the copyright management apparatus 1200 using information included in the e-book and verify the usage rights to the e-book.

The copyright management apparatus 1200 is an apparatus for managing the copyright on an e-book, such as management of legal users of the e-book and legal usage periods. The copyright management apparatus 1200 verifies the usage rights to the e-book at a request of the e-book integrity verification apparatus 1100.

The user terminal denotes a device that includes a memory means and a microprocessor installed for a calculation capability. The user terminal may be a desktop computer, a laptop computer, a workstation, a palmtop computer, an ultra mobile personal computer (UMPC), a tablet personal computer (PC), a personal digital assistant (PDA), a webpad, a cellular phone, a smart phone, or so on.

The communication network 1300 may not only be a data communication network, such as a local area network (LAN), a metropolitan area network (MAN), a wide area network (WAN), and the Internet, but may also be a broadcasting network, a telephone network, or so on. The communication network 1300 may be either a wired communication network or a wireless communication network, and may employ any communication scheme.

Meanwhile, the e-book integrity verification apparatus 1100 has been described as being separated from the user terminal, but the present invention is not limited to the e-book integrity verification apparatus 1100 separated from the user terminal. In an exemplary embodiment, the e-book integrity verification apparatus 1100 may be implemented in one body with the user terminal. Needless to say, the e-book integrity verification apparatus 1100 may also be implemented in one body with the copyright management apparatus 1200.

FIG. 12 is a detailed block diagram of an apparatus for verifying the integrity of an e-book according to an exemplary embodiment of the present invention.

Referring to FIG. 12, the e-book integrity verification apparatus 1100 includes an e-book receiving unit 1110, an e-book integrity verification unit 1130, an e-book usage rights verification unit 1150, and an e-book output unit 1170.

The e-book receiving unit 1110 receives e-book data EB from the user terminal. As mentioned above, the e-book data EB conforms to EPUB, that is, the e-book standard, and includes e-book basis data EB_BD, e-book content data EB_CD, e-book usage rights data EB_RD, e-book encryption data EB_ED, and e-book e-signature data EB_SD. The e-book basis data EB_BD includes basic information on an e-book, copyright management apparatus access information EB_BD_1, and so on. The e-book usage rights data EB_RD includes usage period information EB_RD_1, legal user information EB_RD_2, and so on. The e-book e-signature data EB_SD includes e-signature information EB_SD_1, an e-signature value EB_SD_2, decryption key information EB_SD_3, e-signature-object information EB_SD_4, and so on. The e-signature-object information EB_SD_4 includes first to third e-signature-object information EB_SD_4_1 to EB_SD_4_3 for identifying an object of an e-signature.

The e-book integrity verification unit 1130 verifies the integrity of the e-book data EB received through the e-book receiving unit 1110 to determine whether or not the e-book data EB has been falsified.

In other words, the e-book integrity verification unit 1130 compares a fifth digest value and a sixth digest value with a first digest value EB_SD_1_3 included in the e-signature information EB_SD_1, thereby verifying the integrity of the e-book data EB. The fifth digest value is generated by applying an encryption function employing a public key included in the decryption key information EB_SD_3 as a decryption key to the e-signature value EB_SD_2 based on encryption function identification information EB_SD_1_1 included in the e-signature information EB_SD_1, and the sixth digest value is generated by applying a first hash function based on hash function identification information EB_SD_1_2 included in the e-signature information EB_SD_1 to the e-signature-object information EB_SD_4.

Also, the e-book integrity verification unit 1130 respectively compares a seventh digest value, an eighth digest value, and a ninth digest value with a second digest value included in the first e-signature-object information EB_SD_4_1, a third digest value included in the second e-signature-object information EB_SD_4_2, and a fourth digest value included in the third e-signature-object information EB_SD_4_3, thereby verifying the integrity of the e-book data EB. The seventh digest value is generated by applying a second hash function based on hash function identification information included in the first e-signature-object information EB_SD_4_1 to the e-book encryption data EB_ED, the eighth digest value is generated by applying the second hash function based on hash function identification information included in the second e-signature-object information EB_SD_4_2 to the e-book usage rights data EB_RD, and the ninth digest value is generated by applying the second hash function based on hash function identification information included in the third e-signature-object information EB_SD_4_3 to the e-book basis data EB_BD.

The e-book usage rights verification unit 1150 accesses the copyright management apparatus 1200 using at least one of a DRM solution supplier, a domain code, and information on the URL of the copyright management apparatus 1200 included in the copyright management apparatus access information EB_BD_1, and verifies the usage rights to the e-book.

The e-book output unit 1170 has a display module (not shown), and outputs the e-book data EB through the display module when the e-book integrity verification unit 1130 determines that the e-book data EB has not been falsified. Here, the display module may be a liquid crystal display (LCD), a thin film transistor LCD (TFTLCD), an organic light emitting diode (OLED) display, a flexible display, a three-dimensional (3D) display, or so on.

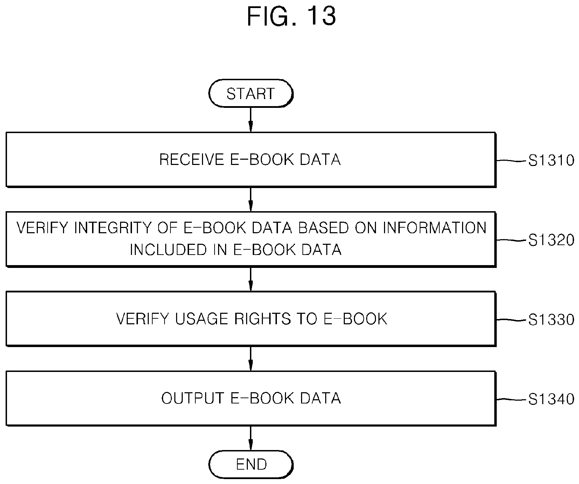

FIG. 13 is a flowchart illustrating a method of verifying the integrity of an e-book according to an exemplary embodiment of the present invention.

The e-book integrity verification apparatus 1100 receives e-book data EB from the user terminal (S1310). Subsequently, the e-book integrity verification apparatus 1100 verifies the integrity of the e-book data EB based on information included in the e-book data EB to determine whether or not the received e-book data EB has been falsified (S1320).

In other words, the e-book integrity verification apparatus 1100 compares a fifth digest value and a sixth digest value with a first digest value EB_SD_1_3 included in e-signature information EB_SD_1, thereby verifying the integrity of the e-book data EB. The fifth digest value is generated using encryption function identification information EB_SD_1_1 included in e-signature information EB_SD_1, decryption key information EB_SD_3, and e-signature value EB_SD_2, and the sixth digest value is generated using hash function identification information EB_SD_1_2 and e-signature-object information EB_SD_4.

Also, the e-book integrity verification apparatus 1100 compares seventh to ninth digest values generated using first e-signature-object information EB_SD_4_1, second e-signature-object information EB_SD_4_2, and third e-signature-object information EB_SD_4_3 with second to fourth digest values included in the first e-signature-object information EB_SD_4_1, the second e-signature-object information EB_SD_4_2, and the third e-signature-object information EB_SD_4_3, thereby verifying the integrity of the e-book data EB.

Then, the e-book integrity verification apparatus 1100 verifies the usage rights to the e-book (S1330). In other words, the e-book integrity verification apparatus 1100 accesses the copyright management apparatus 1200 using copyright management apparatus access information EB_BD_1 and verifies the usage rights to the e-book. Subsequently, when it is determined that the e-book data EB has not been falsified, the e-book integrity verification apparatus 1100 outputs the e-book data EB (S1340).

The present invention may be implemented as computer-readable codes in a computer-readable recording medium. The computer-readable recording medium includes all types of recording media storing data that can be read by a computer system. Examples of the computer-readable recording medium include a read-only memory (ROM), a random access memory (RAM), a compact disc ROM (CD-ROM), a magnetic tape, a floppy disk, an optical data storage, and so on. The computer-readable recording medium may also be implemented in the form of carrier waves (e.g., transmission via the Internet). In addition, the computer-readable recording medium may be distributed to computer systems connected via a network, in which computer-readable codes can be stored and executed in a distributed manner.

While the invention has been shown and described with reference to certain exemplary embodiments thereof, it will be understood by those of ordinary skill in the art that various changes in form and details may be made therein without departing from the scope of the invention as defined by the appended claims.

## Claims

1. An apparatus for verifying integrity of an electronic book, e-book, the apparatus comprising:
an e-book receiving unit (1110) configured to receive e-book data (EB) including e-book basis data (EB_BD), e-book usage rights data (EB_RD), e-book encryption data (EB_ED) and e-book e-signature data (EB_SD), and
an e-book integrity verification unit (1130) configured to verify integrity of the e-book data (EB) received through the e-book receiving unit (1110), and
wherein the e-book basis data (EB_BD) includes title information of the e-book,
wherein the e-book usage rights data (EB_RD) includes usage period information and legal user information of the e-book,
wherein the e-book encryption data (EB_ED) includes information on encryption of the e-book,
wherein the e-book e-signature data (EB_SD) includes e-signature information, an e-signature value, decryption key information and e-signature-object information,
wherein the e-signature-object information includes a second digest value generated by applying a second hash function to the e-book encryption data (EB_ED), a third digest value generated by applying the second hash function to the e-book usage rights data (EB_RD) and a fourth digest value generated by applying a second hash function to the e-book basis data (EB_BD),
wherein the e-signature information includes a first digest value generated by applying a first hash function to the e-signature-object information,
wherein the e-signature value is generated by applying an encryption function employing a private key as an encryption key to the first digest value,
wherein the e-book integrity verification unit (1130) verifies integrity of the e-book data (EB) by comparing a fifth digest value generated by applying the encryption function employing a public key corresponding to the private key as a decryption key to the e-signature value with the first digest value included in the e-signature information, and by comparing the first digest value with a sixth digest value generated by applying the first hash function to the e-signature object information,
wherein the e-book integrity verification unit (1130) verifies the integrity of the e-book data (EB) by comparing a ninth digest value generated by applying the second hash function to the e-book basis data (EB_BD) with the fourth digest value included in the e-signature-object information, comparing an eighth digest value generated by applying the second hash function to the e-book usage rights (EB_RD) data with the third digest value included in the e-signature-object information, and comparing a seventh digest value generated by applying the second hash function to the e-book encryption data (EB_ED) with the second digest value included in the e-signature-object information.

2. The apparatus of claim 1, further comprising an e-book usage rights verification unit (1150) configured to access a copyright management apparatus (1300) based on access information of the copyright management apparatus and verify usage rights to the e-book,
wherein the e-book basis data further includes the copyright management apparatus access information.

3. The apparatus of claim 1, further comprising an e-book output unit (1170) configured to output the e-book data when the e-book integrity verification unit determines that the received e-book data has not been falsified.

4. A method of verifying integrity of an electronic book, e-book, the method comprising:
receiving e-book data (EB) including e-book basis data (EB_BD), e-book usage rights data (EB_RD), e-book encryption data (EB_ED) and e-book e-signature data (EB_SD), and
verifying integrity of the e-book data (EB), and wherein the e-book basis data (EB_BD) includes title information of the e-book,
wherein the e-book usage rights data (EB_RD) includes usage period information and legal user information of the e-book,
wherein the e-book encryption data (EB_ED) includes information on encryption of the e-book,
wherein the e-book e-signature data (EB_SD) includes e-signature information, an e-signature value, decryption key information and e-signature-object information, wherein the e-signature-object information includes a second digest value generated by applying a second hash function to the e-book encryption data (EB_ED), a third digest value generated by applying the second hash function to the e-book usage rights data (EB_RD) and a fourth digest value generated by applying a second hash function to the e-book basis data (EB_BD),
wherein the e-signature information includes a first digest value generated by applying a first hash function to the e-signature-object information,
wherein the e-signature value is generated by applying an encryption function employing a private key as an encryption key to the first digest value,
wherein the verifying integrity of the e-book data (EB) comprises comparing a fifth digest value generated by applying the encryption function employing a public key corresponding to the private key as a decryption key to the e-signature value with the first digest value included in the e-signature-information, and by comparing the first digest value with a sixth digest value generated by applying the first hash function to the e-signature object information, and
wherein the verifying integrity of the e-book data (EB) comprises comparing a ninth digest value generated by applying the second hash function to the e-book basis data (EB_BD) with the fourth digest value included in the e-signature-object information, comparing an eighth digest value generated by applying the second hash function to the e-book usage rights (EB_RD) data with the third digest value included in the e-signature-object information, and comparing a seventh digest value generated by applying the second hash function to the e-book encryption data (EB_ED) with the second digest value included in the e-signature-object information,.

5. The method of claim 4, further comprising accessing a copyright management apparatus (1300) based on access information of the copyright management apparatus and verifying (S1330) usage rights to the e-book,
wherein the e-book basis data further includes the copyright management apparatus access information.

6. The method of claim 4, further comprising outputting (S1340) the e-book data when it is determined that the received e-book data has not been falsified.

## Patentansprüche

1. Vorrichtung zum Verifizieren von Integrität eines elektronischen Buches (E-Book), wobei die Vorrichtung umfasst:
eine E-Book-Empfangseinheit (1110), die so konfiguriert ist, dass sie E-Book-Daten (EB) einschließlich E-Book-Basisdaten (EB_BD), E-Book-Nutzungsrechtsdaten (EB_RD), E-Book-Verschlüsselungsdaten (EB_ED) und E-Book-E-Signaturdaten (EB_SD) empfängt, sowie
eine E-Book-Integritäts-Verifizierungseinheit (1130), die so konfiguriert ist, dass sie Integrität der über die E-Book-Empfangseinheit (1110) empfangenen E-Book-Daten (EB) verifiziert, und
wobei die E-Book-Basisdaten (EB_BD) Titelinformationen des E-Books enthalten,
wobei die E-Book-Nutzungsrechtsdaten (EB_RD) Nutzungszeitrauminformationen und rechtliche Benutzerinformationen des E-Books enthalten,
wobei die E-Book-Verschlüsselungsdaten (EB_ED) Informationen über Verschlüsselung des E-Books enthalten,
wobei die E-Book-E-Signaturdaten (EB_SD) E-Signaturinformationen, einen E-Signaturwert, Entschlüsselungsschlüsselinformationen und E-Signatur-Objekt-informationen enthalten,
wobei die E-Signatur-Objektinformationen einen zweiten Digest-Wert, der durch Anwenden einer zweiten Hash-Funktion auf die E-Book-Verschlüsselungsdaten (EB_ED) erzeugt wird, einen dritten Digest-Wert, der durch Anwenden der zweiten Hash-Funktion auf die E-Book-Nutzungsrechtsdaten (EB_RD) erzeugt wird, und einen vierten Digest-Wert enthalten, der durch Anwenden einer zweiten Hash-Funktion auf die E-Book-Basisdaten (EB_BD) erzeugt wird,
wobei die E-Signaturinformationen einen ersten Digest-Wert enthalten, der durch Anwenden einer ersten Hash-Funktion auf die E-Signatur-Objektinformationen erzeugt wird, wobei der E-Signaturwert durch Anwenden einer Verschlüsselungsfunktion, die einen privaten Schlüssel als einen Verschlüsselungsschlüssel verwendet, auf den ersten Digest-Wert erzeugt wird,
wobei die E-Book-Integritäts-Verifizierungseinheit (1130) Integrität der E-Book-Daten (EB) verifiziert, indem sie einen fünften Digest-Wert, der durch Anwenden der Verschlüsselungsfunktion unter Verwendung eines öffentlichen Schlüssels, der dem privaten Schlüssel entspricht, als einen Entschlüsselungsschlüssel auf den E-Signaturwert erzeugt wird, mit dem ersten Digest-Wert vergleicht, der in den E-Signaturinformationen enthalten ist, und indem sie den ersten Digest-Wert mit einem sechsten Digest-Wert vergleicht, der durch Anwenden der ersten Hash-Funktion auf die E-Signatur-objektinformationen erzeugt wird,
wobei die E-Book-Integritäts-Verifizierungseinheit (1130) die Integrität der E-Book-Daten (EB) verifiziert, indem sie einen neunten Digest-Wert, der durch Anwenden der zweiten Hash-Funktion auf die E-Book-Basisdaten (EB_BD) erzeugt wird, mit dem vierten Digest-Wert vergleicht, der in den E-Signatur-Objektinformationen enthalten ist, einen achten Digest-Wert, der durch Anwenden der zweiten Hash-Funktion auf die E-Book-Nutzungsrechtsdaten (EB_RD) erzeugt wird, mit dem dritten Digest-Wert vergleicht, der in den E-Signatur-Objektinformationen enthalten ist, und einen siebten Digest-Wert, der durch Anwenden der zweiten Hash-Funktion auf die E-Book-Verschlüsselungsdaten (EB_ED) erzeugt wird, mit dem zweiten Digest-Wert vergleicht, der in den E-Signatur-Objektinformationen enthalten ist.

2. Vorrichtung nach Anspruch 1, die des Weiteren eine E-Book-Nutzungsrechtsdaten-Verifizierungseinheit (1150) umfasst, die so konfiguriert ist, dass sie auf eine Urheberrechts-Verwaltungsvorrichtung (1300) auf Basis von Zugriffsinformationen der Urheberrechts-Verwaltungsvorrichtung zugreift und Nutzungsrechte an dem E-Book verifiziert,
wobei die E-Book-Basisdaten des Weiteren die Zugriffsinformationen der Urheberrechts-Verwaltungsvorrichtung enthalten.

3. Vorrichtung nach Anspruch 1, die des Weiteren eine E-Book-Ausgabeeinheit (1170) umfasst, die so konfiguriert ist, dass sie die E-Book-Daten ausgibt, wenn die E-Book-Integritäts-Verifizierungseinheit feststellt, dass die empfangenen E-Book-Daten nicht gefälscht worden sind.

4. Verfahren zum Verifizieren von Integrität eines elektronischen Buches (E-Book), wobei das Verfahren umfasst:
Empfangen von E-Book-Daten (EB), einschließlich E-Book-Basisdaten (EB_BD), E-Book-Nutzungsrechtsdaten (EB_RD), E-Book-Verschlüsselungsdaten (EB_ED) und E-Book-E-Signaturdaten (EB_SD), sowie
Verifizieren von Integrität der E-Book-Daten (EB), und wobei die E-Book-Basisdaten (EB_BD) Titelinformationen des E-Books enthalten,
wobei die E-Book-Nutzungsrechtsdaten (EB_RD) Nutzungszeitrauminformationen und rechtliche Benutzerinformationen des E-Books enthalten,
wobei die E-Book-Verschlüsselungsdaten (EB_ED) Informationen über Verschlüsselung des E-Books enthalten,
wobei die E-Book-E-Signaturdaten (EB_SD) E-Signaturinformationen, einen E-Signaturwert, Entschlüsselungsschlüsselinformationen und E-Signatur-Objektinformationen enthalten, wobei die E-Signatur-Objektinformationen einen zweiten Digest-Wert, der durch Anwenden einer zweiten Hash-Funktion auf die E-Book-Verschlüsselungsdaten (EB_ED) erzeugt wird, einen dritten Digest-Wert, der durch Anwenden der zweiten Hash-Funktion auf die E-Book-Nutzungsrechtsdaten (EB_RD) erzeugt wird, und einen vierten Digest-Wert enthalten, der durch Anwenden einer zweiten Hash-Funktion auf die E-Book-Basisdaten (EB_BD) erzeugt wird,
wobei die E-Signaturinformationen einen ersten Digest-Wert enthalten, der durch Anwenden einer ersten Hash-Funktion auf die E-Signatur-Objektinformationen erzeugt wird,
wobei der E-Signaturwert durch Anwenden einer Verschlüsselungsfunktion, die einen privaten Schlüssel als einen Verschlüsselungsschlüssel verwendet, auf den ersten Digest-Wert erzeugt wird,
wobei das Verifizieren von Integrität der E-Book-Daten (EB) Vergleichen eines fünften Digest-Wertes, der durch Anwenden der Verschlüsselungsfunktion unter Verwendung eines öffentlichen Schlüssels, der dem privaten Schlüssel entspricht, als einen Entschlüsselungsschlüssel auf den E-Signaturwert erzeugt wird, mit dem ersten Digest-Wert, der in den E-Signatur-Informationen enthalten ist, und Vergleichen des ersten Digest-Wertes mit einem sechsten Digest-Wert umfasst, der durch Anwenden der ersten Hash-Funktion auf die E-Signatur-Objektinformationen erzeugt wird, und
wobei das Verifizieren von Integrität der E-Book-Daten (EB) Vergleichen eines neunten Digest-Wertes, der durch Anwenden der zweiten Hash-Funktion auf die E-Book-Basisdaten (EB_BD) erzeugt wird, mit dem vierten Digest-Wert, der in den E-Signatur-Objekt-informationen enthalten ist, Vergleichen eines achten Digest-Wertes, der durch Anwenden der zweiten Hash-Funktion auf die E-Book-Nutzungsrechtsdaten (EB_RD) erzeugt wird, mit dem dritten Digest-Wert, der in den E-Signatur-Objektinformationen enthalten ist, und Vergleichen eines siebten Digest-Wertes, der durch Anwenden der zweiten Hash-Funktion auf die E-Book-Verschlüsselungsdaten (EB_ED) erzeugt wird, mit dem zweiten Digest-Wert umfasst, der in den E-Signatur-Objektinformationen enthalten ist.

5. Verfahren nach Anspruch 4, das des Weiteren Zugreifen auf eine Urheberrechts-Verwaltungsvorrichtung (1300) auf Basis von Zugriffsinformationen der Urheberrechts-Verwaltungsvorrichtung und Verifizieren (S1330) von Nutzungsrechten an dem E-Book umfasst,
wobei die E-Book-Basisdaten des Weiteren die Zugriffsinformationen der Urheberrechts-Verwaltungsvorrichtung enthalten.

6. Verfahren nach Anspruch 4, das des Weiteren Ausgeben (S1340) der E-Book-Daten umfasst, wenn festgestellt wird, dass die empfangenen E-Book-Daten nicht gefälscht worden sind.

## Revendications

1. Appareil pour vérifier l'intégrité d'un livre électronique, e-book, l'appareil comprenant:
une unité de réception de livre électronique (1110) configurée pour recevoir des données de livre électronique (EB) comprenant des données de base de livre électronique (EB_BD), des données de droits d'utilisation de livre électronique (EB_RD), des données de cryptage de livre électronique (EB_ED) et des données de signature électronique de livre électronique (EB_SD), et
une unité de vérification de l'intégrité du livre électronique (1130) configurée pour vérifier l'intégrité des données du livre électronique (EB) reçues par l'unité de réception du livre électronique (1110), et
dans lequel les données de base du livre électronique (EB_BD) comprennent les informations sur le titre du livre électronique,
dans lequel les données relatives aux droits d'utilisation du livre électronique (EB_RD) comprennent des informations sur la période d'utilisation et des informations sur l'utilisateur légal du livre électronique,
dans lequel les données de cryptage du livre électronique (EB_ED) comprennent des informations sur le cryptage du livre électronique,
dans lequel les données de signature électronique du livre électronique (EB_SD) comprennent des informations sur la signature électronique, une valeur de signature électronique, des informations sur la clé de décryptage et des informations sur l'objet de la signature électronique,
dans lequel les informations relatives à l'objet de la signature électronique comprennent une deuxième valeur de synthèse générée en appliquant une deuxième fonction de hachage aux données de cryptage du livre électronique (EB_ED), une troisième valeur de synthèse générée en appliquant la deuxième fonction de hachage aux données relatives aux droits d'utilisation du livre électronique (EB_RD) et une quatrième valeur de synthèse générée en appliquant une deuxième fonction de hachage aux données de base du livre électronique (EB_BD),
dans lequel les informations de la signature électronique comprennent une première valeur de synthèse générée en appliquant une première fonction de hachage aux informations de l'objet de la signature électronique,
dans lequel la valeur de la signature électronique est générée en appliquant une fonction de cryptage utilisant une clé privée comme clé de cryptage à la première valeur de synthèse,
dans lequel l'unité de vérification de l'intégrité de livre électronique (1130) vérifie l'intégrité des données de livre électronique (EB) en comparant une cinquième valeur de synthèse générée en appliquant la fonction de cryptage utilisant une clé publique correspondant à la clé privée comme clé de décryptage à la valeur de la signature électronique avec la première valeur de synthèse incluse dans les informations de la signature électronique, et en comparant la première valeur de synthèse avec une sixième valeur de synthèse générée en appliquant la première fonction de hachage aux informations de l'objet de la signature électronique,
dans lequel l'unité de vérification de l'intégrité de livre électronique (1130) vérifie l'intégrité des données du livre électronique (EB) en comparant une neuvième valeur de synthèse générée en appliquant la deuxième fonction de hachage aux données de base du livre électronique (EB_BD) avec la quatrième valeur de synthèse incluse dans les informations de l'objet de la signature électronique, comparer une huitième valeur de synthèse générée en appliquant la deuxième fonction de hachage aux données relatives aux droits d'utilisation du livre électronique (EB_RD) avec la troisième valeur de synthèse incluse dans les informations relatives à l'objet de la signature électronique, et comparer une septième valeur de synthèse générée en appliquant la deuxième fonction de hachage aux données de cryptage du livre électronique (EB_ED) avec la deuxième valeur de synthèse incluse dans les informations relatives à l'objet de la signature électronique.

2. Appareil selon la revendication 1, comprenant en outre une unité de vérification des droits d'utilisation du livre électronique (1150) configurée pour accéder à un appareil de gestion des droits d'auteur (1300) fondé sur les informations d'accès de l'appareil de gestion des droits d'auteur et vérifier les droits d'utilisation du livre électronique,
dans lequel les données de base du livre électronique comprennent en outre les informations d'accès à l'appareil de gestion des droits d'auteur.

3. Appareil selon la revendication 1, comprenant en outre une unité de sortie de livre électronique (1170) configurée pour sortir les données de livre électronique lorsque l'unité de vérification de l'intégrité du livre électronique détermine que les données de livre électronique reçues n'ont pas été falsifiées.

4. Procédé de vérification de l'intégrité d'un livre électronique, e-book, le procédé comprenant:
la réception des données du livre électronique (EB), y compris les données de base du livre électronique (EB_BD), les données sur les droits d'utilisation du livre électronique (EB_RD), les données de cryptage du livre électronique (EB_ED) et les données de signature électronique du livre électronique (EB_SD), et
la vérification de l'intégrité des données du livre électronique (EB), et dans lequel les données de base du livre électronique (EB_BD) comprennent les informations sur le titre du livre électronique,
dans lequel les données relatives aux droits d'utilisation du livre électronique (EB_RD) comprennent des informations sur la période d'utilisation et des informations sur l'utilisateur légal du livre électronique,
dans lequel les données de cryptage du livre électronique (EB_ED) comprennent des informations sur le cryptage du livre électronique,
dans lequel les données de signature électronique de livre électronique (EB_SD) comprennent des informations de signature électronique, une valeur de signature électronique, des informations de clé de décryptage et des informations d'objet de signature électronique, dans lequel les informations d'objet de signature électronique comprennent une deuxième valeur de synthèse générée en appliquant une deuxième fonction de hachage aux données de cryptage de livre électronique (EB_ED), une troisième valeur de synthèse générée en appliquant la deuxième fonction de hachage aux données sur les droits d'utilisation des livres électroniques (EB_RD) et une quatrième valeur de synthèse générée en appliquant une deuxième fonction de hachage aux données de base des livres électroniques (EB_BD),
dans lequel les informations de la signature électronique comprennent une première valeur de synthèse générée en appliquant une première fonction de hachage aux informations de l'objet de la signature électronique,
dans lequel la valeur de la signature électronique est générée en appliquant une fonction de cryptage utilisant une clé privée comme clé de cryptage à la première valeur de synthèse,
dans lequel la vérification de l'intégrité des données du livre électronique (EB) comprend la comparaison d'une cinquième valeur de synthèse générée en appliquant la fonction de cryptage utilisant une clé publique correspondant à la clé privée comme clé de décryptage à la valeur de la signature électronique avec la première valeur de synthèse incluse dans les informations de la signature électronique, et en comparant la première valeur de synthèse avec une sixième valeur de synthèse générée en appliquant la première fonction de hachage aux informations de l'objet de la signature électronique, et
dans lequel la vérification de l'intégrité des données du livre électronique (EB) comprend la comparaison d'une neuvième valeur de synthèse générée en appliquant la deuxième fonction de hachage aux données de base du livre électronique (EB_BD) avec la quatrième valeur de synthèse incluse dans les informations de l'objet de la signature électronique, comparer une huitième valeur de synthèse générée en appliquant la deuxième fonction de hachage aux données relatives aux droits d'utilisation du livre électronique (EB_RD) avec la troisième valeur de synthèse incluse dans les informations relatives à l'objet de la signature électronique, et comparer une septième valeur de synthèse générée en appliquant la deuxième fonction de hachage aux données de cryptage du livre électronique (EB_ED) avec la deuxième valeur de synthèse incluse dans les informations relatives à l'objet de la signature électronique.

5. Procédé selon la revendication 4, comprenant en outre l'accès à un appareil de gestion des droits d'auteur (1300) fondé sur les informations d'accès de l'appareil de gestion des droits d'auteur et la vérification (S1330) des droits d'utilisation du livre électronique,
dans lequel les données de base du livre électronique comprennent en outre les informations d'accès à l'appareil de gestion des droits d'auteur.

6. Procédé selon la revendication 4, comprenant en outre la sortie (S1340) des données du livre électronique lorsqu'il est déterminé que les données du livre électronique reçues n'ont pas été falsifiées.
